(19) Europäisches Patentamt
European Patent Office
Office européen des brevets

(11) **EP 4 174 229 A1**

(12) **EUROPEAN PATENT APPLICATION**
published in accordance with Art. 153(4) EPC

(43) Date of publication:
**03.05.2023 Bulletin 2023/18**

(21) Application number: **21831808.7**

(22) Date of filing: **29.06.2021**

(51) International Patent Classification (IPC):
*E01C 7/18* (2006.01)     *C08L 67/00* (2006.01)
*C08L 95/00* (2006.01)    *C08G 63/00* (2006.01)
*C08G 63/16* (2006.01)

(52) Cooperative Patent Classification (CPC):
**C08G 63/00; C08G 63/16; C08L 67/00;
C08L 95/00; E01C 7/18**

(86) International application number:
**PCT/JP2021/024495**

(87) International publication number:
**WO 2022/004706 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2020   JP 2020113261**

(71) Applicant: **Kao Corporation**
**Chuo-ku**
**Tokyo 103-8210 (JP)**

(72) Inventors:
• **KASHIWAGI, Hirotaka**
  **Wakayama-shi, Wakayama 640-8580 (JP)**
• **AKINO, Yusuke**
  **Wakayama-shi, Wakayama 640-8580 (JP)**
• **FUKURI, Norihiro**
  **Tokyo 131-8501 (JP)**

(74) Representative: **Hoffmann Eitle**
**Patent- und Rechtsanwälte PartmbB**
**Arabellastraße 30**
**81925 München (DE)**

(54) **ASPHALT MODIFIER**

(57)     The present invention provides an asphalt modifier composed of a crystalline polyester that has a structural unit derived from an alcohol component containing a linear aliphatic alcohol and a structural unit derived from a carboxylic acid component, the crystalline polyester having a melting point of 65°C or higher and 160°C or lower.

**Description**

Field of the Invention

The present invention relates to an asphalt modifier, an asphalt composition, an asphalt mixture, methods of producing them, and a road paving method.

Background of the Invention

An asphalt pavement using an asphalt composition has been performed for paving driveways, parking spaces, cargo yards, sidewalks, etc., because of relatively easy construction and a short period of time from beginning of paving works to traffic start. The asphalt pavement includes a road surface that is formed of an asphalt mixture containing aggregates bonded with each other through asphalt, and hence, paved roads exhibit good hardness and good durability.
However, an asphalt pavement surface is degraded over long-term use and repair of the pavement is inevitably needed. Repair of the pavement has resulted in increased maintenance costs and significant influence on car traffic.
PTL 1 (JP 04-8766 A) discloses an asphalt composition containing asphalt and a polyester-based polymer.
PTL 2 (JP 08-311299 A) discloses a bitumen modifier containing as active ingredients: a block copolymer that has at least one polymer block (A) mainly containing a vinyl aromatic hydrocarbon and at least one polymer block (B) mainly containing a conjugated diene, the block copolymer having a content of the vinyl aromatic hydrocarbon of 5 to 95% by weight and a content of the conjugated diene of 95 to 5% by weight; and an oil soluble polyester obtained by polycondensation of a polybasic higher carboxylic acid and a polyhydric alcohol.

Summary of the Invention

The present invention relates to an asphalt modifier composed of a crystalline polyester that has a structural unit derived from an alcohol component containing a linear aliphatic alcohol and a structural unit derived from a carboxylic acid component, the crystalline polyester having a melting point of 65°C or higher and 160°C or lower.

Brief Description of the Drawings

Fig. 1 shows a photograph of an appearance of an asphalt mixture of Example 2-1.
Fig. 2 shows a photograph of an appearance of an asphalt mixture of Example 2-9.
Fig. 3 shows a photograph of an appearance of an asphalt mixture of Comparative Example 2-2.
Fig. 4 shows a photograph of an appearance of an asphalt mixture of Comparative Example 2-1.

Detailed Description of the Invention

An asphalt pavement surface having insufficient fuel resistance is degraded by leakage of motor gasoline or engine oil from vehicles, leading to unevenness on the surface. In addition, an asphalt composition containing a polyester has a problem of storage stability in that the polyester separates in storage at high temperature. When the storage stability at high temperature is insufficient, the performance of the asphalt pavement is ununiform. For example, in the related art disclosed in PTLs 1 and 2, it has been difficult to satisfy both the fuel resistance and the storage stability of the asphalt composition at high temperature.
The present invention relates to: an asphalt modifier that can provide, by being blended into an asphalt composition and an asphalt mixture, an asphalt composition and an asphalt mixture excellent in the storage stability and also excellent in the fuel resistance of a pavement surface after laying; an asphalt composition; an asphalt mixture; methods of producing them; and a road pavement method.
The present invention relates to the following [1] to [6].

[1] An asphalt modifier composed of a crystalline polyester that has a structural unit derived from an alcohol component containing a linear aliphatic alcohol and a structural unit derived from a carboxylic acid component, the crystalline polyester having a melting point of 65°C or higher and 160°C or lower.
[2] An asphalt composition containing an asphalt and the asphalt modifier according to the above [1].
[3] An asphalt mixture containing the asphalt composition according to the above [2] and an aggregate.
[4] A method of producing the asphalt composition according to the above [2], the method including a step of mixing the asphalt and the crystalline polyester.

[5] A method of producing an asphalt mixture, the method including a step of mixing an asphalt, a heated aggregate, and a crystalline polyester simultaneously or in an arbitrary order.

[6] A method of paving a road, the method including a step of laying the asphalt mixture according to the above [4] to form an asphalt pavement material layer.

According to the present invention, it is possible to provide: an asphalt modifier that can provide, by being blended into an asphalt composition and an asphalt mixture, an asphalt composition and an asphalt mixture excellent in the storage stability and also excellent in the fuel resistance of a pavement surface after laying; an asphalt composition; an asphalt mixture; and methods of producing them; and a road pavement method.

[Asphalt Modifier]

The asphalt modifier of the present invention is composed of a crystalline polyester that has a structural unit derived from an alcohol component containing a linear aliphatic alcohol and a structural unit derived from a carboxylic acid component, the crystalline polyester having a melting point of 65°C or higher and 160°C or lower.

The present inventors have found that, by incorporating, into an asphalt composition and an asphalt mixture, an asphalt modifier composed of a crystalline polyester that has a structural unit derived from an alcohol component containing a linear aliphatic alcohol and a structural unit derived from a carboxylic acid component and that has a melting point of 65°C or higher and 160°C or lower, an asphalt composition and an asphalt mixture excellent in the storage stability and also excellent in the fuel resistance of a pavement surface after laying can be obtained.

A detailed mechanism of achieving the effect of the present invention has not been elucidated yet, but is partially considered as follows.

The crystalline polyester that constitutes the asphalt modifier of the present invention and that has a structural unit derived from an aliphatic alcohol may have high affinity to a maltene component which is contained in a large amount in asphalt, and thus the crystalline polyester can be dispersed in asphalt well. As a result, the particle diameter of the dispersed crystalline polyester may be reduced to suppress precipitation of the crystalline polyester, leading to enhancement of the storage stability.

In an asphalt mixture containing a polyester, the polyester may be adsorbed on aggregate to exhibit a coating effect, thus preventing oil from permeating the aggregate surface to enhance the fuel resistance of the asphalt mixture. When the particle size of the dispersed polyester is large and/or the amount of the polyester added is insufficient, the polyester may be ununiformly adsorbed on aggregate, and thus, oil may permeate the aggregate from a part of the aggregate that the polyester is not adsorbed on, resulting in stripping of the aggregate.

In the present invention, by reducing the particle size of the dispersed asphalt modifier composed of a crystalline polyester, the asphalt modifier may exhibit, in an asphalt mixture, an excellent coating effect on aggregate. On the other hand, when the affinity of the polyester to asphalt is enhanced for achieving an excellent coating effect, the affinity to oil components, such as motor gasoline and engine oil, may be also increased, and there is a concern about reduction in the fuel resistance. However, the polyester constituting the asphalt modifier of the present invention is a crystalline polyester which is insoluble in oil components at low temperature, and thus may have an excellent fuel resistance. In particular, since a crystalline polyester having a melting point of 65°C or higher shows a very low solubility in oil components, an excellent fuel resistance enhancing effect may be achieved. In addition, since a crystalline polyester having a melting point of 160°C or lower can be mixed well with asphalt, coarsening of the dispersed particles of the crystalline polyester may be suppressed, thus leading to a good coating effect on aggregate.

Thus, it is presumed that, in the present invention, both the storage stability and the fuel resistance of a pavement surface after laying are achieved.

The definition or the like of terms used herein will be shown below.

In the polyester, the term "structural unit derived from an alcohol component" means a structure resulting from eliminating a hydrogen atom from a hydroxy group of an alcohol component; and the term "structural unit derived from a carboxylic acid component" means a structure resulting from eliminating a hydroxy group from a carboxy group of a carboxylic acid component.

The term "carboxylic acid component" is a concept including not only a carboxylic acid itself but also an anhydride capable of being decomposed during the reaction to produce an acid and an alkyl ester of a carboxylic acid (for example, the number of carbon atoms of the alkyl group is 1 or more and 3 or less). In the case where the carboxylic acid component is an alkyl ester of a carboxylic acid, the number of carbon atoms of the alkyl group that is an alcohol residue of the ester is not counted in the number of carbon atoms of the carboxylic acid component.

Whether a polyester is crystalline or amorphous is determined based on the crystallinity index. The crystallinity index is defined, in a measurement method described in the section of Examples given hereinunder, as the ratio of the softening point of the polyester to the endothermic maximum peak temperature (softening point (°C) / endothermic maximum peak temperature (°C)). The crystalline polyester is a polyester having a crystallinity index of 0.6 or more and 1.4 or less. The crystallinity index can be appropriately adjusted by the type of the raw material monomers and the ratio thereof, and the production conditions, such as the reaction temperature, reaction time, and cooling rate.

[Crystalline Polyester]

The asphalt modifier of the present invention is composed of a crystalline polyester that has a structural unit derived from an alcohol component containing a linear aliphatic alcohol and a structural unit derived from a carboxylic acid component, the crystalline polyester having a melting point of 65°C or higher and 160°C or lower.

(Alcohol component)

The alcohol component in the crystalline polyester needs to contain a linear aliphatic alcohol from the viewpoints of the storage stability and the fuel resistance, and preferably contains a linear aliphatic diol, more preferably contains an $\alpha,\omega$-linear aliphatic diol.
The number of carbon atoms of the linear aliphatic alcohol is preferably 2 or more, more preferably 3 or more, further preferably 4 or more, and preferably 20 or less, more preferably 16 or less, further preferably 12 or less.
Examples of the linear aliphatic alcohol include linear aliphatic diols, such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,16-hexadecanediol, 1,18-octadecanediol, and 1,20-eicosanediol. Among them, ethylene glycol, 1,6-hexanediol, 1,12-dodecanediol, and 1,16-hexadecanediol are preferred. One of the linear aliphatic diols can be used alone or two or more thereof can be used in combination.
The content of the linear aliphatic diol is, from the viewpoints of the storage stability and the fuel resistance, in the alcohol component, preferably 80% by mole or more, more preferably 85% by mole or more, further preferably 90% by mole or more, further preferably 95% by mole or more, and 100% by mole or less, further preferably 100% by mole.
The alcohol component may contain an alcohol component other than the linear aliphatic alcohol. Examples of the other alcohol component include aliphatic alcohols other than linear aliphatic alcohols, such as 1,2-propylene glycol and neopentyl glycol; an aromatic diol, such as an alkylene oxide adduct of bisphenol A; trihydric or higher alcohols, such as glycerol, pentaerythritol, and trimethylolpropane. One or two or more of the alcohol components may be used.

(Carboxylic Acid Component)

Examples of the carboxylic acid component in the crystalline polyester include an aliphatic monocarboxylic acid, aliphatic dicarboxylic acid, aromatic dicarboxylic acid, and a tribasic or higher and hexabasic or lower polybasic carboxylic acid compound. From the viewpoints of the storage stability and the fuel resistance, the carboxylic acid component is preferably an aliphatic dicarboxylic acid or an aromatic dicarboxylic acid, more preferably a linear aliphatic dicarboxylic acid or an aromatic dicarboxylic acid. One of the carboxylic acid components can be used alone or two or more thereof can be used in combination.
The number of carbon atoms in the main chain of the aliphatic dicarboxylic acid is, from the viewpoints of the storage stability and the fuel resistance, preferably 2 or more, more preferably 4 or more, further preferably 5 or more, further preferably 6 or more, and preferably 20 or less, more preferably 18 or less, further preferably 16 or less.
Examples of the aliphatic dicarboxylic acid include oxalic acid, malonic acid, fumaric acid, sebacic acid, dodecanedioic acid, tetradecanedioic acid, hexadecanedioic acid, octadecanedioic acid, and eicosanedioic acid. Among them, sebacic acid, dodecanedioic acid, tetradecanedioic acid, or hexadecanedioic acid is preferred.
The number of carbon atoms of the aromatic dicarboxylic acid is, from the viewpoints of the storage stability and the fuel resistance, preferably 8 or more, and preferably 20 or less, more preferably 16 or less, further preferably 12 or less.
Examples of the aromatic dicarboxylic acid include isophthalic acid, terephthalic acid, naphthalene dicarboxylic acid, anthracene dicarboxylic acid, and phenanthrene dicarboxylic acid. Among them, terephthalic acid is preferred.
The content of the aliphatic dicarboxylic acid or aromatic dicarboxylic acid in the carboxylic acid component is preferably 80% by mole or more, more preferably 85% by mole or more, further preferably 90% by mole or more, further preferably 95% by mole or more, and 100% by mole or less, further preferably 100% by mole.
The carboxylic acid component may contain a carboxylic acid component other than the aliphatic dicarboxylic acid and aromatic dicarboxylic acid. Examples of the other carboxylic acid component include aliphatic monocarboxylic acids, such as stearic acid, capric acid, lauric acid, myristic acid, palmitic acid, arachidic acid, behenic acid, and lignoceric acid; tribasic or higher polybasic carboxylic acids, such as trimellitic acid and pyromellitic acid. One or two or more of the carboxylic acid components may be used.
In the crystalline polyester of the present invention, the sum of the number of carbon atoms of the structural unit derived from an alcohol component containing a linear aliphatic alcohol and the number of carbon atoms of the structural unit derived from a carboxylic acid component is, from the viewpoints of the storage stability and the fuel resistance, preferably 4 or more, more preferably 6 or more, further preferably 8 or more, further preferably 10 or more, and preferably 40 or less, more preferably 32 or less, further preferably 28 or less, further preferably 26 or less.

In one of embodiments of the present invention that are preferred from the viewpoints of the storage stability and the fuel resistance, the crystalline polyester is a crystalline polyester having a structural unit derived from a linear aliphatic diol having 2 or more and 12 or less carbon atoms and a structural unit derived from a linear aliphatic dicarboxylic acid having 4 or more and 14 or less carbon atoms or an aromatic dicarboxylic acid having 8 or more and 12 or less carbon atoms, and the sum of the number of carbon atoms of the structural unit derived from a diol and the number of carbon atoms of the structural unit derived from a dicarboxylic acid is 10 or more and 26 or less.

Examples of the crystalline polyester that is preferred from the viewpoints of the storage stability and the fuel resistance in the asphalt composition of the present invention include the following crystalline polyester:

a crystalline polyester having a structural unit derived from 1,6-hexanediol and a structural unit derived from sebacic acid and having a melting point of 65°C or higher and 160°C or lower;
a crystalline polyester having a structural unit derived from ethylene glycol and a structural unit derived from dodecanedioic acid and having a melting point of 65°C or higher and 160°C or lower; and
a crystalline polyester having a structural unit derived from 1,12-dodecanediol and a structural unit derived from sebacic acid and having a melting point of 65°C or higher and 160°C or lower.

(Molar Ratio of Structural Unit Derived from Carboxylic Acid Component to Structural Unit Derived from Alcohol Component)

The equivalent ratio of the carboxy groups of the carboxylic acid component to the hydroxy groups of the alcohol component (COOH group/OH group) is preferably 0.7 or more, more preferably 0.8 or more, and preferably 1.3 or less, more preferably 1.2 or less.

(Properties of Crystalline Polyester)

The softening point of the crystalline polyester is, from the viewpoints of the storage stability and the fuel resistance, preferably 45°C or higher, more preferably 60°C or higher, further preferably 70°C or higher, and preferably 180°C or lower, more preferably 170°C or lower, further preferably 160°C or lower.

The melting point of the crystalline polyester is, from the viewpoints of the storage stability and the fuel resistance, 65°C or higher, preferably 66°C or higher, and 160°C or lower, preferably 155°C or lower, more preferably 150°C or lower.

The acid value of the crystalline polyester is, from the viewpoint of promoting adsorption on aggregate to enhance the fuel resistance, preferably 2 mgKOH/g or more, more preferably 3 mgKOH/g or more, further preferably 4 mgKOH/g or more, and from the viewpoint of the storage stability, preferably 40 mgKOH/g or less, more preferably 30 mgKOH/g or less, further preferably 20 mgKOH/g or less.

The weight average molecular weight Mw of the crystalline polyester is, from the viewpoints of the storage stability and the fuel resistance, preferably 1,000 or more, more preferably 2,000 or more, further preferably 3,000 or more, and preferably 80,000 or less, more preferably 40,000 or less, further preferably 20,000 or less.

The softening point, melting point, acid value, hydroxy value, and glass transition point of a crystalline polyester can be measured according to methods described in the section of Examples. Note that the softening point, melting point, acid value, hydroxy value, and glass transition point can be controlled by the composition of row material monomers, the molecular weight, the amount of a catalyst, the reaction conditions, and the like.

(Production Method of Crystalline Polyester)

The method of producing the crystalline polyester is not particularly limited, but for example, the crystalline polyester can be produced by polycondensation of such an alcohol component and a carboxylic acid component as described above.

The temperature of the polycondensation reaction is not particularly limited, and from the viewpoint of controlling the reactivity to provide the storage stability and the fuel resistance, preferably 160°C or higher and 260°C or lower.

In the polycondensation reaction, a tin(II) compound having no Sn-C bond, such as tin(II) di(2-ethylhexanoate), may be used as a catalyst, from the viewpoints of the storage stability and the fuel resistance, in an amount, based on 100 parts by mass of the total amount of the alcohol component and the carboxylic acid component, of preferably 0.01 parts by mass or more, more preferably 0.2 parts by mass or more, and preferably 1.5 parts by mass or less, more preferably 0.6 parts by mass or less.

In the polycondensation reaction, in addition to the catalyst, from the viewpoints of the storage stability and the fuel resistance, a pyrogallol compound, such as gallic acid, may be used as an esterification promotor in an amount, based on 100 parts by mass of the total amount of the alcohol component and the carboxylic acid component, of preferably 0.001 parts by mass or more, more preferably 0.005 parts by mass or more, further preferably 0.01 parts by mass or more, and preferably 0.15 parts by mass or less, more preferably 0.10 parts by mass or less, further preferably 0.05 parts by mass or less.

The asphalt modifier of the present invention can be used for obtaining an asphalt composition, for example, by being mixed with an asphalt. An aggregate is added to the resulting asphalt composition to produce an asphalt mixture, which can then be used for pavement. The asphalt modifier of the present invention can be suitably used as a modifier to be blended into an asphalt mixture containing an aggregate.

[Asphalt Composition]

The asphalt composition of the present invention is an asphalt composition containing an asphalt and the asphalt modifier. The asphalt composition of the present invention is an asphalt composition obtained by blending an asphalt and the asphalt modifier.

[Asphalt]

The asphalt composition of the present invention contains an asphalt.

As the asphalt, various asphalts can be used. In addition to a straight asphalt which is petroleum asphalt for pavement, examples of asphalt include modified asphalts. Examples of the modified asphalts include blown asphalt; and a polymer-modified asphalt modified with a polymer material, such as a thermoplastic elastomer or a thermoplastic resin. The term "straight asphalt" refers to a residual bituminous material obtained by treating a crude oil in an atmospheric distillation apparatus, a vacuum distillation apparatus, or the like. The term "blown asphalt" means an asphalt obtained by heating a mixture of a straight asphalt and a heavy oil and then blowing air thereinto to undergo oxidation. The asphalt is preferably selected from the group consisting of a straight asphalt and a polymer-modified asphalt. From the viewpoint of further enhancing the fuel resistance, a modified asphalt is more preferred, and from the viewpoint of versatility, a straight asphalt is more preferred.

(Thermoplastic Elastomer)

Examples of the thermoplastic elastomer in the polymer-modified asphalt include at least one selected from a styrene/butadiene block copolymer (hereinafter also referred to simply as "SB"), a styrene/butadiene/styrene block copolymer (hereinafter also referred to simply as " SBS"), a styrene/butadiene random copolymer (hereinafter also referred to simply as " SBR"), a styrene/isoprene block copolymer (hereinafter also referred to simply as " SI"), a styrene/isoprene/styrene block copolymer (hereinafter also referred to simply as " SIS"), a styrene/isoprene random copolymer (hereinafter also referred to simply as " SIR"), an ethylene/vinyl acetate copolymer, an ethylene/acrylate ester copolymer, a styrene/ethylene/butylene/styrene copolymer, a styrene/ethylene/propylene/styrene copolymer, a polyurethane-based thermoplastic elastomer, a polyolefin-based thermoplastic elastomer, an isobutylene/isoprene copolymer, a polyisoprene, a polychloroprene, a synthetic rubber other than the above, and a natural rubber.

Examples of commercially available products of the ethylene/acrylate ester copolymer include "Elvaroy" (manufactured by DuPont) and "Rexpearl EEA" (manufactured by Mitsubishi Chemical Corporation).

Among them, the thermoplastic elastomer is, from the viewpoint of durability of asphalt pavement, preferably at least one selected from SB, SBS, SBR, SI, SIS, SIR, and an ethylene/acrylate ester copolymer, more preferably at least one selected from SB, SBS, SBR, SI, SIS, and SIR, further preferably at least one selected from SBR and SBS.

The content of the elastomer in the polymer-modified asphalt is, from the viewpoint of the fuel resistance, in 100% by mass of the polymer-modified asphalt, preferably 0.1% by mass or more, more preferably 0.5% by mass or more, further preferably 1% by mass or more, further preferably 2% by mass or more, and preferably 30% by mass or less, more preferably 20% by mass or less, further preferably 10% by mass or less, further preferably 5% by mass or less.

The content of the straight asphalt or modified asphalt in the asphalt composition is, from the viewpoint of exhibiting the asphalt performance, preferably 60% by mass or more, more preferably 65% by mass or more, further preferably 70% by mass or more, and from the viewpoint of containing a crystalline polyester to provide the storage stability and the fuel resistance, preferably 98% by mass or less, more preferably 95% by mass or less, further preferably 90% by mass or less.

(Content of Crystalline Polyester)

The content of the crystalline polyester in the asphalt composition of the present invention is, from the viewpoints of the storage stability and the fuel resistance, based on 100 parts by mass of the asphalt, preferably 0.1 parts by mass or more, more preferably 0.5 parts by mass or more, further preferably 1 parts by mass or more, and from the viewpoint of workability, preferably 30 parts by mass or less, more preferably 25 parts by mass or less, further preferably 20 parts by mass or less. Note that the content of the crystalline polyester is determined according to the content of the asphalt in the asphalt mixture.

[Production Method of Asphalt Composition]

The method of producing the asphalt composition of the present invention preferably include a step of mixing an asphalt and the asphalt modifier (crystalline polyester).

The asphalt composition is obtained by melting an asphalt with heat, adding the crystalline polyester thereto, and mixing the mixture by stirring with a generally used mixer until the components are uniformly dispersed. Examples of the generally used mixier include a homomixer, a dissolver, a paddle mixer, a ribbon mixer, a screw mixer, a planetary mixer, a vacuum reverse-flow mixer, a roll mill, and a twin screw extruder.

The temperature in mixing an asphalt and the asphalt modifier is, from the viewpoint of uniformly dispersing the crystalline polyester constituting the asphalt modifier in the asphalt, preferably 100°C or higher, more preferably 120°C or higher, further preferably 140°C or higher, further preferably 150°C or higher, and preferably 230°C or lower, more preferably 210°C or lower, further preferably 200°C or lower, further preferably 190°C or lower.

The time of mixing an asphalt and the asphalt modifier is, from the viewpoint of efficiently uniformly dispersing the crystalline polyester constituting the asphalt modifier in the asphalt, preferably 0.1 hours or more, more preferably 0.5 hours or more, further preferably 1.0 hour or more, further preferably 1.5 hours or more, and preferably 10 hours or less, more preferably 7 hours or less, further preferably 5 hours or less, further preferably 3 hours or less.

[Asphalt Mixture]

The asphalt composition of the present invention is a binder composition, and can be used for pavement, for example, after an aggregate is added thereto to provide an asphalt mixture. That is, the asphalt composition of the present invention is suitable for pavement, and especially suitable for road pavement.

The asphalt mixture of the present invention contains the asphalt composition and an aggregate. In other words, the asphalt mixture contains at least an asphalt, an asphalt modifier (crystalline polyester), and an aggregate.

[Aggregate]

As the aggregate, for example, any of crushed stones, cobble stones, gravel, sand, recycled aggregate, ceramic, and the like can be selected and used. As the aggregate, any of a coarse aggregate having a particle diameter of 2.36 mm or more and a fine aggregate having a particle diameter of less than 2.36 mm can be used.

Examples of the coarse aggregate include crushed stones having a particle diameter range of 2.36 mm or more and less than 4.75 mm, crushed stones having a particle diameter range of 4.75 mm or more and less than 12.5 mm, crushed stones having a particle diameter range of 12.5 mm or more and less than 19 mm, and crushed stones having a particle diameter range of 19 mm or more and less than 31.5 mm.

The fine aggregate is preferably a fine aggregate having a particle diameter of 0.075 mm or more and less than 2.36 mm. Examples of the fine aggregate include river sand, hill sand, pit sand, sea sand, crushed sand, fine sand, screenings, crushed stone dust, silica sand, artificial sand, glass cullet, molding sand, and recycled aggregate-crushed sand.

The particle diameter is a value defined in JIS A5001:2008.

Among them, a combination of the coarse aggregate and the fine aggregate is preferred.

The fine aggregate may contain a filler having a particle diameter of less than 0.075 mm. Examples of the filler include sand, fly ash, calcium carbonate such as limestone powder, and hydrated lime. Among them, from the viewpoint of enhancing the dry strength, calcium carbonate is preferred.

From the viewpoint of enhancing the dry strength, the average particle diameter of the filler is preferably 0.001 mm or more, and preferably 0.05 mm or less, more preferably 0.03 mm or less, further preferably 0.02 mm or less. The average particle diameter of the filler can be measured with a laser diffraction particle size distribution analyzer. Here, the average particle diameter means an average particle diameter of 50% cumulative volume ($D_{50}$).

(Measurement Method of Average Particle Diameter of Filler)

The average particle diameter of the filler is a value measured using a laser diffraction particle size distribution analyzer "LA-950" (manufactured by HORIBA, Ltd.) under the following conditions.

**EP 4 174 229 A1**

- Measurement method: flow method
- Dispersion medium: ethanol
- Sample preparation: 2 mg/100mL
- Dispersing method: stirring, 1 minute under built-in ultrasonic waves

From the viewpoint of the durability of asphalt pavement, a mass ratio of the coarse aggregate to the fine aggregate (coarse aggregate / fine aggregate) is preferably 10/90 or more, more preferably 20/80 or more, further preferably 30/70 or more, and preferably 90/10 or less, more preferably 80/20 or less, further preferably 70/30 or less.

Suitable examples of blending in the asphalt mixture are as follows.

(1) An example of the asphalt mixture contains, for example, 30% by volume or more and less than 45% by volume of the coarse aggregate, 30% by volume or more and 50% by volume or less of the fine aggregate, and 5% by volume or more and 10% by volume or less of the asphalt composition (fine-graded asphalt).

(2) An example of the asphalt mixture contains, for example, 45% by volume or more and less than 70% by volume of the coarse aggregate, 20% by volume or more and 45% by volume or less of the fine aggregate, and 3% by volume or more and 10% by volume or less of the asphalt composition (dense-graded asphalt).

(3) An example of the asphalt mixture contains, for example, 70% by volume or more and 80% by volume or less of the coarse aggregate, 10% by volume or more and 20% by volume or less of the fine aggregate, and 3% by volume or more and 10% by volume or less of the asphalt composition (porous asphalt).

In the asphalt mixture, other components may be further blended, as the need arises.

In a conventional asphalt mixture containing an aggregate and an asphalt, a blending proportion of the asphalt is generally adopted according to an optimum asphalt amount obtained from "Formulation and Design of Asphalt Composition" as described in "Guideline for Pavement Design and Construction" published by Japan Road Association.

In the present invention, the optimum asphalt amount corresponds to the total amount of the asphalt and the asphalt modifier (crystalline polyester). However, the method of determining the amount is not to be limited to the method as described in "Guideline for Pavement Design and Construction", and the amount may also be determined by any other method.

[Production Method of Asphalt Mixture]

The method of producing an asphalt mixture of the present invention includes a step of mixing an asphalt, a heated aggregate, an asphalt modifier (crystalline polyester) simultaneously or in an arbitrary order.

Specific examples of the method of producing an asphalt mixture include conventional methods of producing an asphalt mixture called a plant mix method, a premix method, and the like. The methods are all a method in which an asphalt and a crystalline polyester are added to a heated aggregate. Examples of the addition method include a premix method in which an asphalt and a crystalline polyester are previously dissolved; and a plant mix method in which a crystalline polyester is put into an asphalt. Among them, the premix method is preferred from the viewpoint of the durability of asphalt pavement.

More specifically, in the mixing step of the method of producing an asphalt mixture, preferably

(i) the asphalt is added to and mixed with the heated aggregate, and then, the crystalline polyester is added and mixed;

(ii) the asphalt and the crystalline polyester are simultaneously added to and mixed with the heated aggregate; or

(iii) a mixture of the asphalt and the crystalline polyester previously mixed with heat is added to and mixed with the heated aggregate.

Among them, a method of (iii) is preferred from the viewpoint of the durability of asphalt pavement.

The temperature of the heated aggregate in the methods of (i) to (iii) is, from the viewpoint of the durability of asphalt pavement, preferably 130°C or higher, more preferably 150°C or higher, further preferably 170°C or higher, furthermore preferably 180°C or higher, and from the viewpoint of preventing thermal deterioration of the asphalt, preferably 230°C or lower, more preferably 210°C or lower, further preferably 200°C or lower.

In the step of mixing, from the viewpoint of the durability of asphalt pavement, the mixing temperature is preferably 130°C or higher, more preferably 150°C or higher, further preferably 170°C or higher, furthermore preferably 180°C or higher, and from the viewpoint of preventing thermal deterioration of the asphalt, preferably 230°C or lower, more preferably 210°C or lower, further preferably 200°C or lower. The mixing time in the step of mixing is not particularly limited, and is preferably 30 seconds or more, more preferably 1 minute or more, further preferably 2 minutes or more, furthermore preferably 5 minutes or more. The upper limit of the time is not particularly limited, and is preferably about 30 minutes.

From the viewpoint of the durability of asphalt pavement, the method of producing an asphalt mixture preferably includes, after the step of mixing, a step of keeping the obtained mixture at the mixing temperature.

In the step of keeping, the mixture may be further mixed as long as the temperature or higher is kept.

In the step of keeping, the mixing temperature is preferably 130°C or higher, more preferably 150°C or higher, further preferably 170°C or higher, furthermore preferably 180°C or higher, and from the viewpoint of preventing thermal deterioration of the asphalt composition, is preferably 230°C or lower, more preferably 210°C or lower, further preferably 200°C or lower. The time of keeping in the step of keeping is preferably 0.5 hours or more, more preferably 1 hour or more, further preferably 1.5 hours or more. The upper limit of the time is not particularly limited, and is, for example, about 5 hours.

[Road Pavement Method]

The asphalt mixture of the present invention is suitable for paving a road, and as described above, an asphalt mixture in which an aggregate is added to the asphalt composition is used for paving a road.

The road pavement method preferably includes laying the asphalt mixture on a road to form an asphalt pavement material layer. Specifically, the road pavement method includes a step of mixing an asphalt, the crystalline polyester, and an aggregate to obtain an asphalt mixture (Step 1), and a step of laying the asphalt mixture obtained in the Step 1 on a road to form an asphalt pavement material layer (Step 2). The asphalt pavement material layer is generally a base course or a top course, and from the viewpoint of exhibiting the effect of the fuel resistance, the asphalt pavement material layer is preferably a top course.

The asphalt mixture may be subjected to compaction laying by such a method with a known laying machine configuration. In the case of using a heated asphalt mixture, from the viewpoint of the durability of asphalt pavement, a compaction temperature thereof is preferably 100°C or higher, more preferably 120°C or higher, further preferably 130°C or higher, and preferably 200°C or lower, more preferably 180°C or lower.

The present invention further discloses the following embodiments.

<1> An asphalt modifier composed of a crystalline polyester having a structural unit derived from an alcohol component containing a linear aliphatic alcohol and a structural unit derived from a carboxylic acid component, the crystalline polyester having a melting point of 65°C or higher and 160°C or lower.

<2> The asphalt modifier according to the above <1>, wherein the linear aliphatic alcohol contains an $\alpha,\omega$-linear aliphatic diol having 2 or more and 20 or less carbon atoms, and the carboxylic acid component contains one or more selected from a linear aliphatic dicarboxylic acid having 2 or more and 20 or less carbon atoms and an aromatic dicarboxylic acid having 8 or more and 20 or less carbon atoms.

<3> The asphalt modifier according to the above <1> or <2>, wherein the linear aliphatic alcohol contains an $\alpha,\omega$-linear aliphatic diol having 2 or more and 12 or less carbon atoms, and the carboxylic acid component contains one or more selected from a linear aliphatic dicarboxylic acid having 2 or more and 16 or less carbon atoms and an aromatic dicarboxylic acid having 8 or more and 12 or less carbon atoms.

<4> The asphalt modifier according to any one of the above <1> to <3>, wherein the linear aliphatic alcohol contains an $\alpha,\omega$-linear aliphatic diol having 2 or more and 12 or less carbon atoms, and the carboxylic acid component contains one or more selected from a linear aliphatic dicarboxylic acid having 4 or more and 14 or less carbon atoms and an aromatic dicarboxylic acid having 8 or more and 12 or less carbon atoms.

<5> The asphalt modifier according to the above <1> or <2>, wherein the linear aliphatic alcohol contains an $\alpha,\omega$-linear aliphatic diol having 2 or more and 20 or less carbon atoms, and the carboxylic acid component contains a linear aliphatic dicarboxylic acid having 2 or more and 20 or less carbon atoms, the structural unit derived from an alcohol component containing a linear aliphatic alcohol and the structural unit derived from a carboxylic acid component having 4 or more and 40 or less carbon atoms in total.

<6> The asphalt modifier according to any one of the above <1> to <3>, wherein the linear aliphatic alcohol contains an $\alpha,\omega$-linear aliphatic diol having 2 or more and 12 or less carbon atoms, and the carboxylic acid component contains a linear aliphatic dicarboxylic acid having 2 or more and 16 or less carbon atoms, the structural unit derived from an alcohol component containing a linear aliphatic alcohol and the structural unit derived from a carboxylic acid component having 4 or more and 28 or less carbon atoms in total.

<7> The asphalt modifier according to any one of the above <1> to <4>, wherein the linear aliphatic alcohol contains an $\alpha,\omega$-linear aliphatic diol having 2 or more and 12 or less carbon atoms, and the carboxylic acid component contains a linear aliphatic dicarboxylic acid having 4 or more and 14 or less carbon atoms, the structural unit derived from an alcohol component containing a linear aliphatic alcohol and the structural unit derived from a carboxylic acid component having 6 or more and 26 or less carbon atoms in total.

<8> The asphalt modifier according to the above <1> or <2>, wherein the linear aliphatic alcohol contains an $\alpha,\omega$-linear aliphatic diol having 2 or more and 20 or less carbon atoms, and the carboxylic acid component contains an aromatic dicarboxylic acid having 8 or more and 20 or less carbon atoms, the structural unit derived from an alcohol component containing a linear aliphatic alcohol and the structural unit derived from a carboxylic acid component having 10 or more and 40 or less carbon atoms in total.

<9> The asphalt modifier according to the above <1>or <2>, wherein the linear aliphatic alcohol contains an $\alpha,\omega$-linear aliphatic diol having 2 or more and 16 or less carbon atoms, and the carboxylic acid component contains an aromatic dicarboxylic acid having 8 or more and 12 or less carbon atoms, the structural unit derived from a linear aliphatic alcohol and the structural unit derived from a carboxylic acid component having 10 or more and 26 or less carbon atoms in total. Examples

The property values were measured and evaluated by the following methods.

In Examples and Comparative Examples described below, unless otherwise specified, the parts and % are by mass.

[Softening Point ($T_s$) of Resin]

Using a flow tester "CFT-500D" (manufactured by Shimadzu Corporation), while heating 1 g of a sample at a temperature rise rate of 6°C/min, a load of 1.96 MPa was applied by a plunger, and the sample was extruded through a nozzle having a diameter of 1 mm and a length of 1 mm. The amount of descent of the plunger of the flow tester versus the temperature was plotted, and a temperature at which a half amount of the sample flowed out was defined as the softening point of the sample.

[Crystallinity index]

Using a differential scanning calorimeter "Q-100" (manufactured by TA Instruments Japan Inc.), 0.02 g of a sample was measured into an aluminum pan and was cooled from a room temperature (20°C) to 0°C at a temperature lowering rate of 10°C/min. Subsequently, the sample was kept at the temperature for 1 minute, and then, the quantity of heat was measured while increasing the temperature at a temperature rise rate of 10°C/min to 180°C. Among observed endothermic peaks, a peak having the maximum peak area was taken as the endothermic maximum peak temperature ($T_{max}$).

The crystallinity index was obtained as $T_s/T_{max}$.

The crystalline polyester is a polyester having a crystallinity index of 0.6 or more and 1.4 or less.

[Melting Point ($T_m$) and Glass Transition Point ($T_g$) of Resin]

Using a differential scanning calorimeter "Q-100" (manufactured by TA Instruments Japan Inc.), 0.01 to 0.02 g of a sample was measured into an aluminum pan, was heated to 200°C, and then cooled from the temperature to 0°C at a temperature lowering rate of 10°C/min. Subsequently, the measurement was performed while increasing the temperature to 150°C at a temperature rise rate of 10°C/min. When the difference between a temperature of a peak having a maximum peak area and the softening point is within 20°C, the temperature was taken as the melting point.

A temperature at which an extension of a baseline in a region of the endothermic maximum peak temperature or lower was intersected with a tangential line having a maximum inclination of a curve in a region of from a rise-up portion of the peak to an apex of the peak was read as the glass transition point of the sample.

Production Examples 1 to 4 and 10 (crystalline polyesters C1 to C4 and C10)

Raw material monomers shown in Tables 1-1 and 1-3 were put in a 10 L four-neck flask equipped with a thermometer, a stainless-steel stirrer bar, a distilling receiver, a nitrogen introducing tube, and a thermocouple, and were kept under a nitrogen atmosphere at 140°C for 6 hours. The temperature was further increased to 200°C over 6 hours. Then, tin(II) di(2-ethylhexanoate) and gallic acid were added thereto, and the mixture was subjected to a reaction at 200°C for 1 hour, followed by a reaction at 8.3 kPa for 1 hour, thereby obtaining crystalline polyesters C1 to C4 and C10.

Production Examples 5, 6, and 9 (crystalline polyesters C5, C6, and C9)

Raw material monomers shown in Table 1-2 and 2 g of t-butyl catechol were put in a 10 L four-neck flask equipped with a thermometer, a stainless-steel stirrer bar, a distilling receiver, a nitrogen introducing tube, and a thermocouple, and were kept under a nitrogen atmosphere at 140°C for 6 hours. The temperature was further increased to 200°C over 6 hours, and then, tin(II) di(2-ethylhexanoate) and gallic acid were put thereto, and the mixture was subjected to a reaction at 200°C for 1 hours, followed by a reaction at 8.3 kPa for 1 hour, thereby obtaining crystalline polyesters C5, C6 and C9.

Production Examples 7 and 8 (crystalline polyesters C7 and C8)

Raw material monomers shown in Table 1-2 were put in a 10 L four-neck flask equipped with a thermometer, a stainless-steel stirrer bar, a distilling receiver, a nitrogen introducing tube, and a thermocouple, and under a nitrogen atmosphere, tin(II) di(2-ethylhexanoate) and gallic acid were added thereto. The temperature was increased to 180°C, was kept at 180°C for 1 hour, and was then increased from 180°C to 210°C at 10°C/hour. Then, a polycondensation reaction was performed at 210°C for 6 hours, followed by a reaction at 210°C under 8.3 kPa for 1 hour, thereby obtaining crystalline polyesters C7 and C8.

Production Example 11 (amorphous polyester A2)

Raw material monomers shown in Table 1-3 other than adipic acid were put in a 10 L four-neck flask equipped with a thermometer, a stainless-steel stirrer bar, a distilling receiver, a nitrogen introducing tube, and a thermocouple, and under a nitrogen atmosphere, tin(II) di(2-ethylhexanoate) and gallic acid were added thereto. The temperature was increased to 180°C, was kept at 180°C for 1 hour, and was then increased from 180°C to 210°C at 10°C/hour. Then, a polycondensation reaction was performed at 210°C for 7 hours, followed by a reaction at 210°C under 8.3 kPa for 1 hour. Next, adipic acid was added thereto, and a reaction was performed at 210°C under 10 kPa until the described softening point was achieved, thereby obtaining an amorphous polyester A2.

Production Example 12 (crystalline polyester A3)

Raw material monomers shown in Table 1-3 were put in a 10 L four-neck flask equipped with a thermometer, a stainless-steel stirrer bar, a distilling receiver, a nitrogen introducing tube, and a thermocouple, and under a nitrogen atmosphere, tin(II) di(2-ethylhexanoate) and gallic acid were added thereto. The temperature was increased to 180°C, was kept at 180°C for 1 hour, and was then increased from 180°C to 210°C at 10°C/hour. Then, a polycondensation reaction was performed at 210°C for 6 hours, followed by a reaction at 210°C under 8.3 kPa for 1 hour, thereby obtaining a crystalline polyester A3.

Table 1-1

| Production Example | | | 1 | | 2 | | 3 | | 4 | |
|---|---|---|---|---|---|---|---|---|---|---|
| Resin | | | C1 | | C2 | | C3 | | C4 | |
| Raw material monomer | Monomer composition | | Charged amount (g) | Molar ratio | Charged amount (g) | Molar ratio | Charged amount (g) | Molar ratio | Charged amount (g) | Molar ratio |
| | Alcohol component | EG (C$_2$) | - | - | 1241 | 100 | - | - | - | - |
| | | 1,4-BD (C$_4$) | - | - | - | - | - | - | - | - |
| | | 1,6-HD (C$_6$) | 2363 | 100 | - | - | - | - | - | - |
| | | 1,12-DD (C$_{12}$) | - | - | - | - | 4047 | 100 | 4047 | 100 |
| | | 1,16-HDD (C$_{16}$) | - | - | - | - | - | - | - | - |
| | | BPA-EO | - | - | - | - | - | - | - | - |
| | | BPA-PO | - | - | - | - | - | - | - | - |
| | Carboxylic acid component | FA (C$_4$) | - | - | - | - | - | - | - | - |
| | | SA (C$_{10}$) | 4247 | 105 | - | - | 4045 | 100 | - | - |
| | | DDA (C$_{12}$) | - | - | 4468 | 97 | - | - | - | - |
| | | TDA (C$_{14}$) | - | - | - | - | - | - | 5322 | 103 |
| | | HDA (C$_{16}$) | - | - | - | - | - | - | - | - |
| | | TPA | - | - | - | - | - | - | - | - |
| | | ADA | - | - | - | - | - | - | - | - |
| Esterification catalyst | Tin(II) di(2-ethylhexanoate) (charged amount, g) | | 33.1 | | 28.5 | | 40.5 | | 46.8 | |
| Promotor | Gallic acid (charged amount, g) | | 3.3 | | 2.9 | | 4.1 | | 4.7 | |

(continued)

| Production Example | | 1 | 2 | 3 | 4 |
|---|---|---|---|---|---|
| Resin | | C1 | C2 | C3 | C4 |
| Properties | Softening point ($T_s$, °C) | 72.3 | 82.0 | 94.1 | 97.5 |
| | Endothermic maximum peak temperature ($T_{max}$, °C) | 66.7 | 76.4 | 83.7 | 88.2 |
| | Melting point ($T_m$, °C) | 66.7 | 76.4 | 83.7 | 88.2 |
| | Glass transition point ($T_g$, °C) | - | - | - | - |
| | Crystallinity index | 1.1 | 1.1 | 1.1 | 1.1 |
| | Crystalline/amorphous | crystalline | crystalline | crystalline | crystalline |

Table 1-2

| Production Example | | | 5 | | 6 | | 7 | | 8 | | 9 | |
|---|---|---|---|---|---|---|---|---|---|---|---|---|
| Resin | | | C5 | | C6 | | C7 | | C8 | | C9 | |
| | Monomer composition | | Charged amount (g) | Molar ratio | Charged amount (g) | Molar ratio | Charged amount (g) | Molar ratio | Charged amount (g) | Molar ratio | Charged amount (g) | Molar ratio |
| Raw material monomer | Alcohol component | EG (C$_2$) | - | - | - | - | - | - | - | - | - | - |
| | | 1,4-BD (C$_4$) | - | - | - | - | - | - | - | - | 1802 | 100 |
| | | 1,6-HD (C$_6$) | - | - | 2363 | 100 | - | - | 2363 | 100 | - | - |
| | | 1,12-DD (C$_{12}$) | 4047 | 100 | - | - | 4047 | 100 | - | - | | |
| | | 1,16-HDD (C$_{16}$) | - | - | - | - | - | - | - | - | - | - |
| | | BPA-EO | - | - | - | - | - | - | - | - | - | - |
| | | BPA-PO | - | - | - | - | - | - | - | - | - | - |
| | Carboxylic acid component | FA (C$_4$) | 2321 | 100 | 2321 | 100 | - | - | - | - | 2321 | 100 |
| | | SA (C$_{10}$) | - | - | - | - | - | - | - | - | - | - |
| | | DDA (C$_{12}$) | - | - | - | - | - | - | - | - | - | - |
| | | TDA (C$_{14}$) | - | - | - | - | - | - | - | - | - | - |
| | | HDA (C$_{16}$) | - | - | - | - | - | - | - | - | - | - |
| | | TPA | - | - | | | 2659 | 80 | 2991 | 90 | - | - |
| | | ADA | - | - | - | - | - | - | - | - | - | - |
| Esterification catalyst | Tin(II) di(2-ethylhexanoate) (charged amount, g) | | 31.8 | | 23.4 | | 33.5 | | 26.8 | | 20.6 | |
| Promotor | Gallic acid (charged amount, g) | | 3.2 | | 2.3 | | 3.4 | | 2.7 | | 2.1 | |

(continued)

| Production Example | | 5 | 6 | 7 | 8 | 9 |
|---|---|---|---|---|---|---|
| Resin | | C5 | C6 | C7 | C8 | C9 |
| Properties | Softening point ($T_s$, °C) | 92.0 | 100.8 | 80.1 | 150.2 | 120.0 |
| | Endothermic maximum peak temperature ($T_{max}$, °C) | 81.4 | 110.1 | 71.9 | 143.0 | 125.0 |
| | Melting point ($T_m$, °C) | 81.4 | 110.1 | 71.9 | 143.0 | 125.0 |
| | Glass transition point ($T_g$, °C) | - | - | - | - | - |
| | Crystallinity index | 1.1 | 0.9 | 1.1 | 1.1 | 1.0 |
| | Crystalline/amorphous | crystalline | crystalline | crystalline | crystalline | crystalline |

Table 1-3

| | | | Production Example | 10 | | - | | 11 | | 12 | |
|---|---|---|---|---|---|---|---|---|---|---|---|
| | | | Resin | C10 | | A1*1 | | A2 | | A3 | |
| | | Monomer composition | | Charged amount (g) | Molar ratio | Charged amount (g) | Molar ratio | Charged amount (g) | Molar ratio | Charged amount (g) | Molar ratio |
| Raw material monomer | Alcohol component | EG (C$_2$) | | - | - | - | - | - | - | - | - |
| | | 1,4-BD (C$_4$) | | - | - | - | - | - | - | 1802 | 100 |
| | | 1,6-HD (C$_6$) | | - | - | - | - | - | - | - | - |
| | | 1,12-DD (C$_{12}$) | | - | - | - | - | - | - | - | - |
| | | 1,16-HDD (C$_{16}$) | | 5169 | 100 | - | - | | | - | - |
| | | BPA-EO | | - | - | - | - | 1950 | 30 | - | - |
| | | BPA-PO | | - | - | - | - | 4900 | 70 | - | - |
| | Carboxylic acid component | FA (C$_4$) | | - | - | - | - | - | - | - | - |
| | | SA(C$_{10}$) | | - | - | - | - | - | - | - | - |
| | | DDA (C$_{12}$) | | - | - | - | - | - | - | - | - |
| | | TDA (C$_{14}$) | | - | - | - | - | - | - | - | - |
| | | HDA (C$_{16}$) | | 5728 | 100 | - | - | | | - | - |
| | | TPA | | - | - | - | - | 2656 | 80 | 2326 | 70 |
| | | ADA | | - | - | - | - | 584 | 20 | 585 | 20 |
| Esterification catalyst | Tin(II) di(2-ethylhexanoate) (charged amount, g) | | | 54.5 | | - | | 50.5 | | 23.6 | |
| Promotor | Gallic acid (charged amount, g) | | | 5.4 | | - | | 5.0 | | 2.4 | |

EP 4 174 229 A1

| Production Example | | 10 | - | 11 | 12 |
|---|---|---|---|---|---|
| Resin | | C10 | A1*1 | A2 | A3 |
| Properties | Softening point ($T_s$, °C) | 106.7 | 65.2 | 116.0 | 190.4 |
| | Endothermic maximum peak temperature ($T_{max}$, °C) | 94.1 | 60.0 | 65.5 | 182.0 |
| | Melting point ($T_m$, °C) | 94.1 | 60.0 | - | 182.0 |
| | Glass transition point ($T_g$, °C) | - | - | 63.0 | - |
| | Crystallinity index | 1.1 | 1.1 | 1.8 | 1.0 |
| | Crystalline/amorphous | crystalline | crystalline | amorphous | crystalline |

The alcohol components and the carboxylic acid components used are as follows.

BPA-PO: polyoxypropylene (2.2) adduct of bisphenol A
BPA-EO: polyoxyethylene (2.2) adduct of bisphenol A
EG: ethylene glycol
BD: butanediol
HD: hexanediol
DD: dodecanediol
HDD: hexadecanediol
FA: fumaric acid
SA: sebacic acid
DDA: dodecanedioic acid
TDA: tetradecanedioic acid
HDA: hexadecanedioic acid
TPA: terephthalic acid
ADA: adipic acid

As the polyester A1, poly-$\varepsilon$-caprolactone (molecular weight: about 10,000, manufactured by FUJIFILM Wako Pure Chemical Corporation) was used (*1 in the tables).

In Examples, as the asphalt, an asphalt of PG grade 64-22 (straight asphalt) and an asphalt of PG grade 76-22 (modified asphalt) manufactured by Associated Asphalt were used.

As the aggregate, an aggregate manufactured by Blythe Construction was used. 3,000 g of the aggregate contains 750 g of gravel (coarse aggregate), 1950 g of screenings (fine aggregate), and 300 g of pit sand (fine aggregate). Passing % by mass of each component is as follows.

Passing % by mass:

[Gravel]

| Sieve opening: 9.50 mm: | 90.4% by mass |
|---|---|
| Sieve opening: 8.00 mm: | 73.3% by mass |
| Sieve opening: 4.75 mm: | 24.8% by mass |
| Sieve opening: 2.80 mm: | 3.9% by mass |
| Sieve opening: 1.00 mm: | 1.2% by mass |
| Sieve opening: 0.50 mm: | 0.8% by mass |

[Screenings]

| Sieve opening 9.50 mm: | 100.0% by mass |
|---|---|
| Sieve opening: 8.00 mm: | 99.9% by mass |
| Sieve opening: 4.75 mm: | 98.2% by mass |
| Sieve opening: 2.80 mm: | 77.4% by mass |
| Sieve opening: 1.00 mm: | 36.8% by mass |
| Sieve opening: 0.50 mm: | 22.1% by mass |

[Pit sand]

| Sieve opening 9.50 mm: | 100.0% by mass |
|---|---|
| Sieve opening: 8.00 mm: | 100.0% by mass |

(continued)

Sieve opening: 4.75 mm:   98.0% by mass
Sieve opening: 2.80 mm:   94.2% by mass
Sieve opening: 1.00 mm:   70.6% by mass
Sieve opening: 0.50 mm:   33.6% by mass

Example 1-1

[Asphalt Composition]

100 g of an asphalt previously heated to 180°C was measured into a 200 mL stainless-steel beaker, 5 g of the crystalline polyester C1 was added thereto, and the mixture was stirred at 180°C at a stirring rate of 400 rpm for 2 hours. An asphalt composition AS-1 prepared through the above process was subjected to a storage stability test. The result was shown in Table 2.

Examples 1-2 to 1-11, Comparative Examples 1-1 to 1-3

Asphalt compositions were prepared in the same manner as in Example 1-1 except for changing the formulation to ones shown in Table 2, and were subjected to a storage stability test. The results were shown in Table 2.

Example 2-1

[Asphalt Mixture]

Among 233 g of an asphalt, 2.33 g of the crystalline polyester C1, and 3,000 g of the aggregate, the aggregate was put in a mortar mixer and was mixed at 180°C for 30 seconds. Subsequently, the asphalt was added thereto and the mixture was mixed for 1 minute. Furthermore, the crystalline polyester C1 was added thereto and the mixture was mixed for 1 minute. The resulting asphalt mixture was stored at 180°C for 15 minutes, and 1,200 g of the mixture was filled in a mold. The asphalt mixture was molded by tamping both the surfaces thereof 75 times for each surface using an asphalt automatic tamping apparatus (NA-507) manufactured by Nakajima Technology Inc. Then, the resultant was allowed to cool to room temperature over 15 hours, thereby obtaining an asphalt specimen M-1. The specimen was subjected to a fuel resistance evaluation test. The results are shown in Table 3.

Examples 2-2 to 2-11, Comparative Examples 2-1 to 2-4

Asphalt specimens were prepared in the same manner as in Example 2-1 except for changing the formulation to ones shown in Table 3, and were subjected to a fuel resistance evaluation test. The results are shown in Table 3.

[Evaluation Method]

[Storage Stability Test of Asphalt-Polyester Mixture]

50 mL of the asphalt composition was poured into a sample bottle (3.5 cm inner diameter × 7.8 cm height), and was stored in a 180°C oven for 18 hours. Then, the height of precipitation of the polyester in the asphalt composition was measured and was taken as a measure of the storage stability. A lower precipitation indicates a better storage stability.

[Fuel Resistance of Asphalt Specimen]

The asphalt specimen was immersed in kerosene (manufactured by FUJIFILM Wako Pure Chemical Corporation) for 2 minutes. A 4 L round can for oil was used as a container for immersion, and a wire net stage of 7 cm length × 7 cm width × 1 cm height was placed on the bottom of the can so that kerosene was in contact with all the surfaces of the specimen. After immersion for 2 minutes, the specimen was taken out, kerosene on the surfaces was wiped off with a paper towel, and then the weight was measured. The weight was defined as $W_a$.

After measuring the weight, the specimen was immersed again in kerosene for 24 hours. After 24 hours, the specimen was taken out, and kerosene on the surfaces was wiped off with a paper towel. The specimen was further dried in an air atmosphere at a room temperature (20°C) for 24 hours, and then the weight was measured again. The weight was defined as $W_b$. The weight loss which is a measure of the fuel resistance was deterimined according to the following formula.

$$\text{Weight loss (\%)} = [(W_a - W_b) / W_a] \times 100$$

A smaller weight loss means a better fuel resistance of the asphalt specimen.
The appearance of the specimen after immersion in kerosene for 24 hours was evaluated according to the following criteria.

A: The same appearance as before oil immersion is kept.
B: Stripping of asphalt was slightly seen.
C: Stripping of asphalt and loss of aggregate were partially seen.
D: Stripping of asphalt and loss of aggregate were notably seen.

Table 2

| | Asphalt Composition | Asphalt | | Polyester | | Storage stability evaluation |
| | | Type *2 | Content (g) | Type | Content (parts by mass) *1 | Amount of PES precipitation after storage for 18 hours (mm) |
|---|---|---|---|---|---|---|
| Example 1-1 | AS-1 | A | 100 | C1 | 5 | 0 |
| Example 1-2 | AS-2 | A | 100 | C2 | 5 | 0 |
| Example 1-3 | AS-3 | A | 100 | C3 | 5 | 0 |
| Example 1-4 | AS-4 | A | 100 | C4 | 5 | 0 |
| Example 1-5 | AS-5 | A | 100 | C5 | 5 | 0 |
| Example 1-6 | AS-6 | A | 100 | C6 | 5 | 0 |
| Example 1-7 | AS-7 | A | 100 | C7 | 5 | 0 |
| Example 1-8 | AS-8 | A | 100 | C8 | 5 | 1 |
| Example 1-9 | AS-9 | A | 100 | C9 | 5 | 2 |
| Example 1-10 | AS-10 | A | 100 | C10 | 5 | 0 |
| Example 1-11 | AS-11 | B | 100 | C1 | 5 | 0 |
| Comparative Example 1-1 | AS-C1 | A | 100 | - | - | - |
| Comparative Example 1-2 | AS-C2 | A | 100 | A2 | 5 | 4 |
| Comparative Example 1-3 | AS-C3 | A | 100 | A3 | 5 | 4 |
| *1: Content of polyester relative to 100 parts mass of asphalt (parts by mass) *2: Type of asphalt Asphalt A: straight asphalt (PG64-22) Asphalt B: modified asphalt (PG76-22) | | | | | | |

Table 3

| | Asphalt mixture | Aggregate (g) | Asphalt | | | Polyester | | | Fuel resistance evaluation | |
|---|---|---|---|---|---|---|---|---|---|---|
| | | | Type *3 | Content (g) | Content (parts by mass) * 1 | Type | Content (g) | Content (parts by mass) *2 | Weight loss (%) | Appearance of specimen after oil immersion |
| Example 2-1 | M-1 | 3000 | A | 233 | 7.76 | C1 | 2.33 | 1 | 0.8 | A |
| Example 2-2 | M-2 | 3000 | A | 233 | 7.76 | C2 | 2.33 | 1 | 1.0 | A |
| Example 2-3 | M-3 | 3000 | A | 233 | 7.76 | C3 | 2.33 | 1 | 1.0 | A |
| Example 2-4 | M-4 | 3000 | A | 233 | 7.76 | C4 | 2.33 | 1 | 1.0 | A |
| Example 2-5 | M-5 | 3000 | A | 233 | 7.76 | C5 | 2.33 | 1 | 1.1 | A |
| Example 2-6 | M-6 | 3000 | A | 233 | 7.76 | C6 | 2.33 | 1 | 1.0 | A |
| Example 2-7 | M-7 | 3000 | A | 233 | 7.76 | C7 | 2.33 | 1 | 1.1 | A |
| Example 2-8 | M-8 | 3000 | A | 233 | 7.76 | C8 | 2.33 | 1 | 1.5 | B |
| Example 2-9 | M-9 | 3000 | A | 233 | 7.76 | C9 | 2.33 | 1 | 1.6 | B |
| Example 2-10 | M-10 | 3000 | A | 233 | 7.76 | C10 | 2.33 | 1 | 1.5 | B |
| Example 2-11 | M-11 | 3000 | B | 233 | 7.76 | C1 | 2.33 | 1 | 0.7 | A |
| Comparative Example 2-1 | M-C1 | 3000 | A | 233 | 7.76 | - | 2.33 | - | 3.2 | D |
| Comparative Example 2-2 | M-C2 | 3000 | A | 233 | 7.76 | A1 | 2.33 | 1 | 2.0 | C |
| Comparative Example 2-3 | M-C3 | 3000 | A | 233 | 7.76 | A2 | 2.33 | 1 | 2.7 | D |
| Comparative Example 2-4 | M-C4 | 3000 | A | 233 | 7.76 | A3 | 2.33 | 1 | 2.5 | C |

*1: Content of asphalt relative to 100 parts mass of aggregate parts by mass)
*2: Content of polyester relative to 100 parts mass of asphalt (parts by mass)
*3: Type of asphalt
Asphalt A: straight asphalt (PG64-22)
Asphalt B: modified asphalt (PG76-22)

In the asphalt composition of Comparative Example 1-2 containing an amorphous polyester and the asphalt composition of Comparative Example 1-3 containing a crystalline polyester having a high melting point, precipitation of the polyester was notably seen after storage at 180°C for 18 hours, that is, the storage stability was insufficient. In the asphalt composition of Comparative Example 2-1 containing no crystalline polyester and the asphalt compositions of Comparative Examples 2-2, 2-3, and 2-4 containing a polyester other than the specific crystalline polyester, the fuel resistance against kerosene was insufficient.

In contrast, it is found, according to the present invention, that an asphalt composition containing the specific amount of the specific crystalline polyester does not form precipitation even after storage at 180°C for 18 hours, that is, is superior in the storage stability, and that an asphalt specimen containing the specific amount of the specific crystalline polyester is superior in the fuel resistance against kerosene.

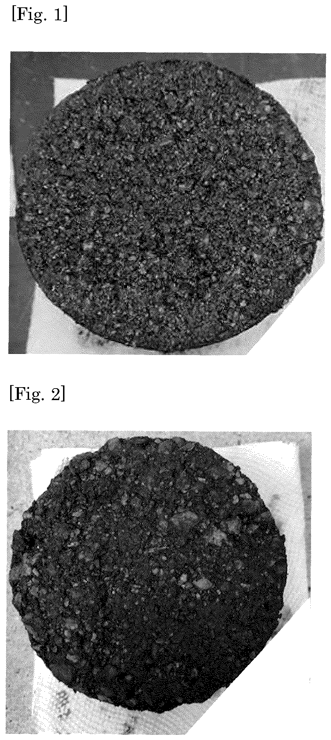

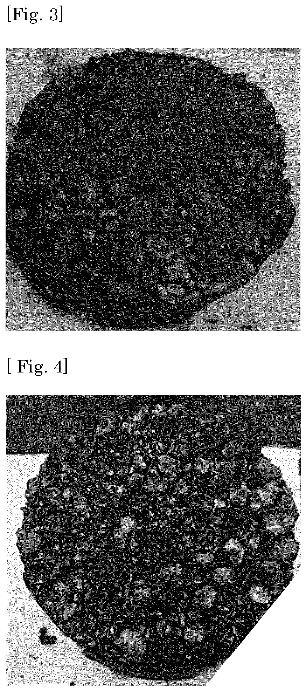

Figs. 1 to 4 are each a photograph of an appearance of an asphalt specimen after immersion in kerosene for 24 hours. Fig. 1 is a photograph of an appearance of a specimen obtained by using the asphalt mixture of Example 2-1. The asphalt is uniformly distributed, exposure of the aggregate is not seen, and the asphalt specimen keeps the same appearance as before oil immersion. Fig. 2 is a photograph of an appearance of a specimen obtained by using the asphalt mixture of Example 2-9. Stripping of the asphalt is slightly seen, but the asphalt is almost uniformly distributed and the asphalt specimen keeps the original shape as a whole. This is considered to cause no problem in actual use. Fig. 3 is a photograph of an appearance of a specimen obtained by using the asphalt mixture of Comparative Example 2-2. Apart in which stripping of the asphalt proceeds and loss of the aggregate are partially seen. The specimen is thus unusable. Fig. 4 is a photograph of an appearance of a specimen obtained by using the asphalt mixture of Comparative Example 2-1. Stripping of the asphalt and loss of the aggregate are notably seen and the asphalt specimen does not keep the initial shape. The specimen is thus unusable.

**Claims**

1. An asphalt modifier comprising a crystalline polyester that has a structural unit derived from an alcohol component containing a linear aliphatic alcohol and a structural unit derived from a carboxylic acid component, the crystalline polyester having a melting point of 65°C or higher and 160°C or lower.

2. The asphalt modifier according to claim 1, wherein the linear aliphatic alcohol comprises a linear aliphatic diol.

3. The asphalt modifier according to claim 2, wherein the linear aliphatic diol is a linear aliphatic diol having 2 or more and 20 or less carbon atoms.

4. The asphalt modifier according to claims 2 or 3, wherein the linear aliphatic diol is an $\alpha,\omega$-linear aliphatic diol.

5. The asphalt modifier according to any one of claims 1 to 4, wherein the alcohol component has a content of the linear aliphatic alcohol of 80% by mole or more.

6. The asphalt modifier according to any one of claims 1 to 5, wherein the carboxylic acid component comprises one or more selected from a linear aliphatic dicarboxylic acid and an aromatic dicarboxylic acid.

7. The asphalt modifier according to claim 6, wherein the linear aliphatic dicarboxylic acid is a linear aliphatic dicarboxylic acid having 2 or more and 20 or less carbon atoms and the aromatic dicarboxylic acid is an aromatic dicarboxylic acid having 8 or more and 20 or less carbon atoms.

8. The asphalt modifier according to claim 6 or 7, wherein the carboxylic acid component has a total content of the linear aliphatic dicarboxylic acid and the aromatic dicarboxylic acid of 80% by mole or more.

9. The asphalt modifier according to any one of claims 1 to 8, wherein the structural unit derived from an alcohol component containing a linear aliphatic alcohol and the structural unit derived from a carboxylic acid component have 4 or more and 40 or less carbon atoms in total.

10. An asphalt composition comprising an asphalt and the asphalt modifier according to any one of claims 1 to 9.

11. The asphalt composition according to claim 10, wherein the asphalt modifier is contained in an amount of 0.1 parts by mass or more and 30 parts by mass or less relative to 100 parts by mass of the asphalt.

12. An asphalt mixture comprising the asphalt composition according to claim 10 or 11 and an aggregate.

13. A method of producing the asphalt composition according to claim 10 or 11, the method comprising a step of mixing the asphalt and the crystalline polyester.

14. A method of producing an asphalt mixture, the method comprising a step of mixing an asphalt, a heated aggregate, and a crystalline polyester simultaneously or in an arbitrary order.

15. The method of producing an asphalt mixture according to claim 14, wherein the crystalline polyester is a crystalline polyester that has a structural unit derived from an alcohol component containing a linear aliphatic alcohol and a structural unit derived from a carboxylic acid component and that has a melting point of 65°C or higher and 160°C or lower, the crystalline polyester being contained in an amount of 0.1 parts by mass or more and 30 parts by mass or less relative to 100 parts by mass of the asphalt.

16. A method of paving a road, the method comprising a step of laying the asphalt mixture according to claim 12 on a road to form an asphalt pavement material layer.

[Fig. 1]

[Fig. 2]

[Fig. 3]

[ Fig. 4]

**INTERNATIONAL SEARCH REPORT**

| International application No. |
| --- |
| PCT/JP2021/024495 |

| A. CLASSIFICATION OF SUBJECT MATTER |
| --- |
| E01C 7/18(2006.01)i; C08L 67/00(2006.01)i; C08L 95/00(2006.01)i; C08G 63/00(2006.01)i; C08G 63/16(2006.01)i |
| FI: C08L95/00; C08G63/16; C08L67/00; E01C7/18; C08G63/00 |
| According to International Patent Classification (IPC) or to both national classification and IPC |

**B. FIELDS SEARCHED**

| Minimum documentation searched (classification system followed by classification symbols) |
| --- |
| E01C7/18; C08L67/00; C08L95/00; C08G63/00; C08G63/16 |

| Documentation searched other than minimum documentation to the extent that such documents are included in the fields searched | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

| Electronic data base consulted during the international search (name of data base and, where practicable, search terms used) |
| --- |
| |

**C. DOCUMENTS CONSIDERED TO BE RELEVANT**

| Category* | Citation of document, with indication, where appropriate, of the relevant passages | Relevant to claim No. |
| --- | --- | --- |
| A | JP 9-235470 A (KAO CORP.) 09 September 1997 (1997-09-09) examples 10-12, comparative examples 31-35 | 1-16 |
| A | JP 2016-35037 A (ASAHI KASEI CHEMICALS CORP.) 17 March 2016 (2016-03-17) entire text | 1-16 |
| P, A | JP 2020-200459 A (KAO CORP.) 17 December 2020 (2020-12-17) claims 9-10 | 1-16 |

| ☐ Further documents are listed in the continuation of Box C. | ☒ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05 August 2021 (05.08.2021) | 17 August 2021 (17.08.2021) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

INTERNATIONAL SEARCH REPORT
Information on patent family members

International application No.

PCT/JP2021/024495

| Patent Documents referred in the Report | Publication Date | Patent Family | Publication Date |
|---|---|---|---|
| JP 9-235470 A | 09 Sep. 1997 | US 5990206 A examples 10-12, comparative examples 31-35 EP 792918 A2 | |
| JP 2016-35037 A | 17 Mar. 2016 | (Family: none) | |
| JP 2020-200459 A | 17 Dec. 2020 | (Family: none) | |

Form PCT/ISA/210 (patent family annex) (January 2015)

REFERENCES CITED IN THE DESCRIPTION

**Patent documents cited in the description**

- JP 4008766 A
- JP 8311299 A

**Non-patent literature cited in the description**

- Guideline for Pavement Design and Construction. Japan Road Association